# EUROPEAN PATENT SPECIFICATION

(11) **EP 3 839 675 B1**
(45) Date of publication and mention of the grant of the patent: **24.07.2024**
(21) Application number: 19218394.5
(22) Date of filing: 20.12.2019
(51) Int. Cl.: G05B 19/23, B66C 13/48, G05B 19/409

(54) **CRANE CONTROL SYSTEM, A VEHICLE, AND A METHOD IN RELATION TO THE SYSTEM**
KRANSTEUERUNGSSYSTEM, FAHRZEUG UND VERFAHREN IN ZUSAMMENHANG MIT DEM SYSTEM
SYSTÈME DE COMMANDE DE GRUE, VÉHICULE ET PROCÉDÉ EN RELATION AVEC LE SYSTÈME

(43) Date of publication of application: 23.06.2021
(73) Proprietor: Hiab AB, 164 22 Kista (SE)
(72) Inventor: ANDERSSON, Lennart, 824 51 Hudiksvall (SE); OHLSSON, Hans, 824 50 Hudiksvall (SE)
(74) Representative: Bjerkén Hynell KB

(56) References cited:
- EP-A1- 3 553 015
- EP-A1- 3 553 460
- WO-A1-2015/113084
- WO-A1-2019/229751
- US-A1- 2013 345 857

## Description

### Technical field

The present disclosure relates to a crane control system, a vehicle, and a method in relation to the system, and in particular a user interface unit used to control semi-automatic movements of the crane during loading/unloading working assignments.

### Background

In known crane working equipment so-called crane tip control (also called boom tip control) and semi-automatic motion of the crane are applied. During a semi-automatic motion of the crane, the crane tip moves along a predefined path from A to B (e.g. for loading/unloading) and then back to A again. B represents a predetermined point in the surrounding of the object to be loaded, and when the crane tip is in this position the operator takes over the control using crane tip control to make the final adjustments of positioning the crane tip. In particular, the present disclosure relates to handle movements of a working tool on a crane tip between a predefined start position and a predefined end position, and the semi-automatic motion of the crane in between these two positions. The semi-automatic functionality that is presently used is hence adapted to a specific application and the start position and end position is defined for that particular use case. A standardized environment with predefined dimensions and positions of the load in relation to the crane is often needed. In reality there is a need to make the semi-automatic motion available to different use cases with a plurality of options for start positions and a plurality of options for end positions.

Some relevant background documents will now be identified and briefly discussed.

EP-3553015 relates to a method for controlling a crane comprising selecting different configurations of a lifting system and automatically bringing the lifting system to the different configurations. US-2013/345857 relates to a tower crane navigation system, and WO-2015/113084 relates to a crane controller having different operation modes. In addition, WO-2019/229751 relates to a system for transporting a load along a transport route being a 3D uploaded route, and EP-3553460 relates to a crane that creates a 3D map on the basis of 3D information acquired by a 3D acquisition means provided on a boom.

However, having multiple combinations of start and end positions also means that it will be more difficult for the operator to manage and make use of the functionality in practice.

There is hence a need to solve these problems in order to take semi-automatic motions of the cranes one step further and covering waste handling and recycling needs where different loading/unloading positions are needed.

The object of the present invention is to achieve a system and method that provides ease of use for the operator, requires less skilled operators to handle loading/unloading, resulting in less damages to load, and thereby an increased productivity.

### Summary

The above-mentioned objects are achieved by the present invention according to the independent claims.

Preferred embodiments are set forth in the dependent claims.

The present invention relates to a first aspect providing a crane control system (2) for a crane (4) arranged to be mounted to a vehicle (6) for transporting a load (8), wherein the crane comprises crane components such as a crane column, a crane boom system and a working tool (10) arranged at the tip of the crane for attaching the load during loading and unloading to or from the vehicle (6). The crane control system comprises:
- a control unit (12) configured to generate control signals to actuators of the crane to control operation of the crane (4) and the working tool (10),
- a user interface unit (14) arranged to receive operator input of wanted movements of the crane for performing a working assignment with the tool. Furthermore, the user interface unit (14) includes:
   - at least three target indicators (16) configured to receive operator activation (18) and to indicate activation, each target indicator represents a target zone surrounding the vehicle, and has a designated three-dimensional (3D) space defined by a coordinate system in relation to said vehicle, and a target zone point A₀ - F₀ being a 3D point within the 3D space, and
   - at least two load indicators (20) configured to receive operator activation (22) and to indicate activation, each load indicator represents a load zone on the vehicle, and has a designated 3D space defined in said coordinate system, and a load zone point L1, L2, L3 being a 3D point within the 3D space.

The user interface unit (14) is configured to determine at least one activation signal (24) as a result of at least two received operator activations (18, 22) from said target/load indicator(s) (16, 20), wherein said activation signal(s) (24) represents at least two different zones, and to apply the activation signal(s) to said control unit (12). The control unit is then configured to:
- receive said activation signal(s) (24);
- determine a sequence of movements of the crane tip between said 3D points connected to said zones along a movement path in either direction,
- assign functionalities related to said movement to at least one user input member (26) of said user interface unit (14), and
- execute the movement of the crane tip by generating control signals, in response to activation of the at least one assigned user input member (26) when said control system (2) is in an automatic operating mode.

The present invention relates to a second aspect providing a vehicle (6) comprising a crane control system (2) as described above.

The present invention relates to a third aspect providing a method of a crane control system (2) for a crane (4) arranged to be mounted to a vehicle (6) for transporting a load (8), wherein the crane comprises crane components such as a crane column, a crane boom system and a working tool (10) arranged at the tip of the crane for attaching the load during loading and unloading to or from the vehicle (6). The crane control system comprises a control unit (12) configured to generate control signals to actuators of the crane to control operation of the crane (4) and the working tool (10), and a user interface unit (14) arranged to receive operator input of wanted movements of the crane for performing a working assignment with the tool.

The method (A1-A6) comprises:
A1 -receiving operator activation (18) of target indicator (16) and indicating activation of activated target indicator, each target indicator represents a target zone surrounding the vehicle, and has a designated three-dimensional (3D) space defined in a coordinate system in relation to said vehicle, and a target zone point A₀ - F₀ being a 3D point within the 3D space,
A2 -receiving operator activation (22) of load indicator (20) and indicating activation of activated load indicator, each load indicator represents a load zone on the vehicle, and has a designated 3D space defined in said coordinate system, and a load zone point L1, L2, L3 being a 3D point within the 3D space,
A3 -determining at least one activation signal (24) as a result of at least two received operator activations (18, 22) from said target/load indicator(s) (16, 20), wherein said activation signal(s) (24) represents at least two different zones, and applying the activation signal(s) to said control unit (12),
A4 -receiving, by said control unit, said activation signal(s) (24); -determining a sequence of movements of the crane tip between said 3D points connected to said zones along a movement path in either direction,
A5 -assigning functionalities related to said movement to at least one user input member (26) of said user interface unit (14), and
A6 -executing the movement of the crane tip by generating control signals, in response to activation of the at least one assigned user input member (26) when said control system (2) is in an automatic operating mode.

The system, vehicle, and method defined by the independent claims is based on having a schematics used as a kind of map for zones on the vehicle and the surroundings of the vehicle. The map defines different zones on the vehicle load bed and also the surrounding of the vehicle, i.e. zones where objects may be loaded or unloaded. Each zone on the schematics would be associated with a three-dimensional (3D) point positioned within the zone, where the crane tip could be moved if unloading or loading would take place within the zone. The operator would then be able to do the fine-level adjustments of the crane tip positioning using e.g. the Crane Tip Control (CTC) functionality (also sometimes referred to as boom tip control). The schematics defining the zones is part of the user interface unit for controlling the crane that is used by the operator.

The operator would choose the zone where the crane tip should go via the user interface unit, e.g. a graphical display and toggle buttons. Using a graphical display, different set-ups of schematics or maps defining the zones would therefore be possible. It would hence be possible to have different set-ups for different applications. For example, the number of zones/positions on the load bed may be varied as well as the number and coverage of zones in the surrounding of the vehicle, and additional layers of zones specifying a longer reach of the crane might be needed for some applications.

From the map a start zone and an end zone may be chosen by the operator by e.g. pressing or through other means selecting the respective load and target indicators on the user interface unit. The start and end zones would be marked in the schematics of the user interface unit and when the choice of start and end zones for the movement is confirmed by the operator, a movement scheme for the crane would be assigned to a user input members, such as a lever or button. The operator may then activate the movement by pushing or pulling the lever or button to initiate the movement path from the chosen start zone to the end zone. The system may e.g. be set up to stop the movement path of the crane if the operator stops pushing or pulling the lever or button. The speed of the movement of the crane may further be made proportional to the lever stroke as an example.

The predefined zones would hence help the operator with the main part of the crane movements and the operator would then be able to take over the last part of the movement from the end position to the exact position of e.g. the loading or unloading.

Different zones are specified in the area on load bed of the vehicle and the surrounding of the vehicle using the map and each zone is mapped to a 3D point within the zone. The 3D point of a zone may e.g. be the centre point of the zone as seen in the horizontal plane, and the height of a 3D point of a zone may be further adapted to the heights of objects to be loaded (e.g. recycling containers) when defined for a specific crane and vehicle during setup of the system. Depending on the application only a subgroup of zones may be set to be available for and selectable by the operator.

Movements along default paths for all the combinations of target and load positions may be pre-stored in the system or calculated based on current conditions when the crane is operated using input from sensors and monitoring devices. New paths may be entered and stored in the system, and further connected to target and load positions, using a learning mode where the manual movements issued by the operator are recorded. Paths that are based on a pre-stored trace, but then modified due to present conditions and input from sensors and monitoring devices would also be possible.

The system and method described herein focuses on the user interface unit and how new combinations of pre-stored zones could be chosen from multiple zones by using the remote user interface unit. Important advantages with the system and method according to the present invention are ease of use for operator and reduced risk of damage to the load and the surrounding. For the vehicle fleet owners it would mean that less skilled operators can be used to operate the cranes and further handle working assignments in a standardized manner, less costs will be spent on damages and further that the productivity will be increased.

A further advantage achieved by the present invention is by having multiple options for predefined load or target positions, the speed in the workflow for several separate work assignments would improve, not just for a single repetitive task.

By implementing the present invention, it is enabled for the crane operator to create new combinations for a semiautomatic movement scheme in an easy and fast manner, and it would hence also be applicable to work assignments that are not constantly re-occurring and may be located at different sites where the vehicle is performing working assignments. A further advantage achieved by the invention is that the operator handling the user interface unit would only need to select zones of interest and not specify the actual coordinates of a position of interest. The zones are easy to recognize on the schematics and may hence be selected in a fast manner without the need to calculate or measure the exact position of e.g. a recycling bin.

Further, by being able to update the 3D point connected to the zone through marking a present position during a working assignment the automatic movements will be easily adaptable to the current working assignment and will improve the usability for the crane operator

### Brief description of the drawings

Figure 1 is a block diagram schematically illustrating the crane control system according to the present invention.
Figure 2 is a schematic illustration of a vehicle provided with a crane when applying the present invention.
Figure 3 is schematic illustration of the user interface unit according to one embodiment of the present invention.
Figure 4 is a flow diagram illustrating the method according to the present invention.

### Detailed description

The crane control system, the vehicle, and the method of the crane control system will now be described in detail with references to the appended figures. Throughout the figures the same, or similar, items have the same reference signs. Moreover, the items and the figures are not necessarily to scale, emphasis instead being placed upon illustrating the principles of the invention.

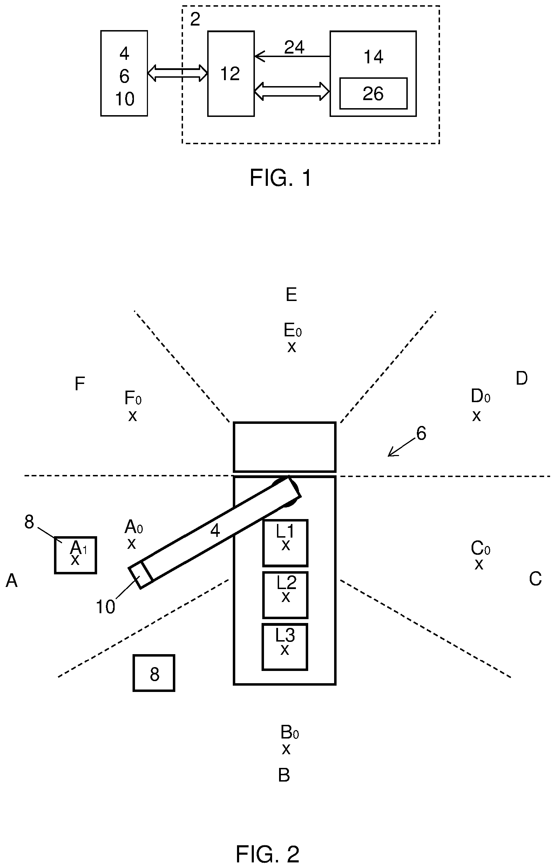

The crane control system 2 will now be described with references to figures 1-3. A crane control system 2 is provided and is intended to be used for a crane 4 arranged to be mounted to a vehicle 6 for transporting a load 8. The crane comprises crane components such as a crane column, a crane boom system and a working tool 10 arranged at the tip of the crane for attaching the load during loading and unloading to or from the vehicle 6. The crane control system comprises a control unit 12 configured to generate control signals to actuators of the crane to control operation of the crane 4 and the working tool 10. This is schematically indicated by a block arrow in figure 1. The control unit is also configured to receive various inputs from a plurality of sensors arranged e.g. on the vehicle, crane, and working tool.

The crane control system also comprises a user interface unit 14 arranged to receive operator input of wanted movements of the crane for performing a working assignment with the tool. A working assignment may be to move a load, e.g. a waste bin or a container, from one position to another during loading/unloading. The user interface unit 14 is structured to established a bi-directional wireless communication link with the control unit 10. This link is implemented in accordance with any available wireless communication protocol, and is indicated by a block arrow in figure 1.

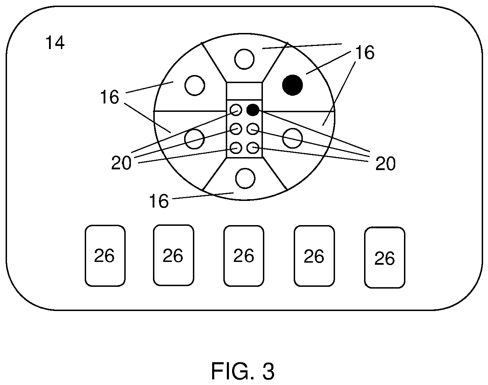

A schematic view of a part of the user interface unit 14 is shown in figure 3. For sake of clarity various items, e.g. various displays, are not shown in the figure, and only those parts necessary for describing and explaining the present invention are shown.

The user interface unit 14 includes at least three target indicators 16 configured to receive operator activation 18 and to indicate activation. Each target indicator represents a target zone A-F surrounding the vehicle, and has a designated three-dimensional (3D) space defined in a coordinate system in relation to the vehicle.

Each target zone A-F of the illustrated example in figure 2 is provided with a target zone point A₀ - F₀ being a 3D point within the 3D space of the target zone. A target indicator 16 may receive operator activation by the operator selecting the indicator e.g. by pressing a button, pulling a lever, or pressing a part of a touch-screen associated with the target indicator. An activated target indicator may change appearance such as colour, e.g. from white to green, which is indicted in figure 3 by a filled black circle.

The user interface unit 14 also includes at least two load indicators 20 configured to receive operator activation 22 and to indicate activation. Each load indicator represents a load zone on the vehicle, and has a designated 3D space defined in the coordinate system. In figure 3, the vehicle is schematically illustrated by a rectangle where six load indicators 20 shown on the load bed. Each load zone of the illustrated example in figure 2 is provided with a default load zone point L1, L2, L3 being a 3D point within the 3D space of the load zone. A load indicator 20 may receive operator activation by the operator selecting the indicator e.g. by pressing a button, pulling a lever, or pressing a part of a touch-screen associated with the load indicator. An activated load indicator may change appearance such as colour, e.g. from white to green, which is indicted in figure 3 by a filled black circle.

Thus, the target/load indicators 16, 20 are configured to both receive operator activation and to indicate activation. They may be implemented as a single indicator, or may be implemented as separate items, i.e. one part structured to receive operator activation, and another part structured to indicate the activation.

All processing of data, and storage of data, related to the target and load zones is performed by the control unit 12.

The user interface unit 14 is configured to determine at least one activation signal 24 as a result of at least two received operator activations 18, 22 from the target/load indicator(s) 16, 20.

The activation signal(s) 24 represents at least two zones - the operator is selecting the zones and the control unit then applies the accurate 3D points connected to those zones to be combined. The at least two 3D points may be represented by one activation signal, or each operator activated 3D points may be represented by separate activation signals.

The activation signal(s) is/are applied to the control unit 12, and the control unit is configured to receive the activation signal(s) 24 including the reference to the at least two zones to be combined. The control unit is configured to determine that the received 3D points belong to the same working assignment. If the working assignment involves two zones received in one activation signal it is clear that they belong to the same working assignment. If the two zones are sent in separated activation signals the control unit may further determine the time interval between those signals and if the time interval is shorter than a defined time (e.g. 5-10 seconds) it will be determined that the two signals relate to the same working assignment. If more than two 3D points are involved similar determinations may be made. As an alternative the operator may actively confirm the selection of zones for a working assignment through interaction with the user interface unit.

From the activation signal(s) the selection of zones to be combined for the working assignment will be identified. As each zone is connected to a 3D point within the 3D space represented by the zone, this 3D point will be used by the control unit. The control unit is then configured to determine a sequence of movements of the crane tip between the 3D points along a movement path in either direction, and to assign functionalities related to the movement to at least one user input member 26 (e.g. levers and/or buttons) of the user interface unit 14.

When the control unit has determined the sequence of movement for the crane tip, it is configured to execute the movement of the crane tip by generating control signals, in response to activation of the at least one assigned user input member 26 when said control system 2 is in an automatic operating mode. These control signals are applied to relevant parts of the vehicle and/or the crane and is indicated by the double block arrow in figure 1.

A movement path may be defined as a sequence of 3D points that the working tool should follow, and may be determined in advance based upon e.g. the width and height of the vehicle, the type of crane, the size of load to be loaded/unloaded, etc. The 3D points connected to the selected zones will form part of the sequence of 3D points defining the movement path. The thus determined path may then be adjusted in dependence of input signals from various sensors arranged at the vehicle or crane until the working tool has reached the intended position.

According to one embodiment, the control unit 12 is further configured to determine a sequence of movements of the crane tip from a present position to one 3D point of a target or load zone. This may be applicable when moving the crane tip from a parked transport position on the vehicle when the vehicle is moving, e.g. when the crane is in a folded position. The control unit would then include the additional movement path from the present position of the crane tip to a zone selected by the operator as a preparatory movement to the defined movement path between the selected zones. This will allow the operator to control this preparatory movement in the same manner as for the movement between selected zones (and its connected 3D points).

According to another embodiment, the defined 3D point is either a default target zone point or the default load zone point, or any present 3D point defined by a working assignment performed by the crane tip. In one exemplary implementation, the operator may actively define a present 3D point, e.g. via the user input members 26.

The default target zone point may be applied in situations where the working tool is to be automatically moved to a target zone indicated on the target indicator for that zone. The working tool is automatically moved to the default target zone point, and the operator then takes over and manually controls the final movement of the working tool to the specific 3D point of the load. This specific position may be stored as the present target point, i.e. a present 3D point defined by a working assignment performed by the crane tip.

This way the operator may update the 3D point that is connected to a zone. When arriving at a site to perform a working assignment, e.g. emptying a recycling bin, the operator may first use the default position connected to a zone where the recycling bin is located. In order to lift the recycling bin the position of the working tool is adjusted from the default position to the relevant position for the attaching the working tool to the bin. This position of the crane tip may then be stored as a present 3D point and connected to the present zone by the operator, e.g. through a user input with the user interface device. This way the 3D point connected to the zone may be updated so that after the recycling bin has been emptied on the selected zone of the load bed the crane tip would return to the updated 3D point instead of the default position. This would improve the workflow, both in terms of time spent on the task and safety, for the operator and further support the operator with working assignment.

In still another embodiment, the target zone point A₁ - F₁ is either a default target zone point, or any present 3D point defined by a working assignment performed by the crane tip.

In figure 2 is illustrated a vehicle 6 from above provided with a crane 4 comprising a working tool 10 arranged at the crane tip. The working assignment is in this case to pick up a load 8 in target zone A. First, the working tool 10 is controlled to be moved to the default target zone point A₀ during the automatic operating mode, then the mode is changed to a manual operating mode and the operator manually controls the tool 10 to be moved to the exact position, denoted A₁, for being connected to the load 8 to be picked up. Thus, A₁ indicates the present target zone point.

According to another embodiment, the control unit 12 is configured to determine the order of operator activation of target indicator(s) and/or load indicator(s) and to determine the direction of the crane tip movement between defined 3D points dependent on said order. This may be applicable in order for the operator to indicate that the crane tip should first move to a target zone including the 3D point of a waste bin to be picked up, and then move the waste bin to a specific load position on the load bed, e.g. L2, and empty the waste bin. In the described situation the operator has first activated the target indicator representing the target zone to be chosen and then activated the load indicator designating the load zone where the waste bin should be emptied. Preferably, this procedure is then continued by returning the waste bin to the place where it was picked up.

According to one embodiment, the crane control system 2 is configured to be operated in two operating modes:
a manual operating mode wherein the crane 4 is operated by control signals generated in response to operator input of crane movements via the user input members 26, and
an automatic operating mode, activated by the operator, and wherein the crane geometry and the crane tip position is changed according to a sequence of movements determined by the control unit 12. Preferably, the control unit 12 is configured to change mode of operation between the manual and automatic operating modes during the sequence of movements. This may occur e.g. either in response of operator input via the user input member 26, or if any sensor indicates that the current operating mode should be changed, e.g. if, during movement of the crane in automatic operating mode, a sensor detects a person interfering with the movement path. The operator may decide to change mode from automatic operating mode to manual mode and then perform some movements manually. If the operator then goes back to the automatic mode the control unit may then add an additional movement path to the defined movement path in order to move the crane tip automatically to a selected zone and its connected 3D point, as explained earlier.

Preferably, the control unit 12 is configured to determine the number, and the position, of target and/or load indicators 16, 20 on the user interface unit 14, dependent on the working assignment and/or the surroundings to the vehicle 6, and to define, on the user interface unit 14, the target and/or load indicators in dependence thereto. The control unit will then generate definition signals and applying those signals to the user interface unit that adapts target and/or load indicators 16, 20 accordingly. In the illustrated example in figure 3, six target zones are indicated by six target indicators on the user interface unit. However, if the working assignment indicates that bins to be load will be on the right side of the vehicle, only three target indicators need to be displayed. Furthermore, in the illustrated example in figure 3, six load zones on the schematic image of the vehicle are indicated by six load indicators on the user interface unit. In a situation where only three load zones are available, e.g. as shown in figure 2, only three load indicators will be shown.

According to the present invention, a vehicle 6 is provided, that comprises a crane control system 2 which has been described above. The vehicle may be of any type provided with a crane, and one implementation are vehicle mounted loader cranes, but the system and method may naturally also be implemented on other types of cranes such as mobile cranes.

The present invention also relates to a method of a crane control system 2 for a crane 4 arranged to be mounted to a vehicle 6 for transporting a load 8. The crane comprises crane components such as a crane column, a crane boom system and a working tool 10 arranged at the tip of the crane for attaching the load during loading and unloading to or from the vehicle 6.

The crane control system has been described in detail above, and it is herein referred to that description. Thus, the crane control system comprises a control unit 12 configured to generate control signals to actuators of the crane to control operation of the crane 4 and the working tool 10, and a user interface unit 14 arranged to receive operator input of wanted movements of the crane for performing a working assignment with the tool.

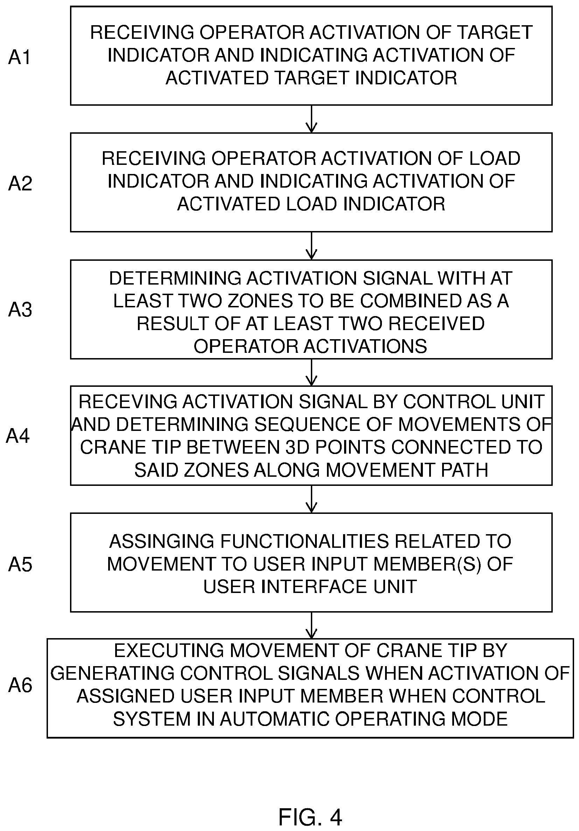

The method is schematically illustrated by the flow diagram shown in figure 4, and comprises method steps A1-A6:
A1 -receiving operator activation 18 of target indicator 16 and indicating activation of activated target indicator, each target indicator represents a target zone surrounding the vehicle, and has a designated three-dimensional (3D) space defined in a coordinate system in relation to the vehicle, and a target zone point A₀ - F₀ being a 3D point within the 3D space,
A2 -receiving operator activation 22 of load indicator 20 and indicating activation of activated load indicator, each load indicator represents a load zone on the vehicle, and has a designated 3D space defined in said coordinate system, and a default load zone point L1, L2, L3 being a 3D point within the 3D space,
A3 -determining at least one activation signal 24 as a result of at least two received operator activations 18, 22 from said target/load indicator(s) 16, 20, wherein said activation signal(s) (24) represents at least two different zones, and applying the activation signal(s) to the control unit 12,
A4 -receiving, by said control unit, said activation signal(s) 24; -determining a sequence of movements of the crane tip between said 3D points along a movement path in either direction,
A5 -assigning functionalities related to said movement to at least one user input member 26 (e.g. levers and/or buttons) of the user interface unit 14, and
A6 -executing the movement of the crane tip by generating control signals, in response to activation of the at least one assigned user input member 26 when said control system 2 is in an automatic operating mode.

According to one embodiment, the method comprises determining a sequence of movements of the crane tip from a present position to one 3D point of a target or load zone.

In another embodiment, the defined 3D point is either a default target zone point or said default load zone point, or any present 3D point defined by a working assignment performed by the crane tip.

According to still another embodiment, the method comprises determining the order of operator activation of target indicators(s) and/or load indicator(s) and determining the direction of the crane tip movement between defined 3D points dependent on said order.

The method preferably comprises operating the crane control system 2 in two operating modes:
a manual operating mode wherein the crane 4 is operated by control signals generated in response to operator input of crane movements via said user input members 26, and
an automatic operating mode, activated by the operator, and wherein the crane geometry and the crane tip position is changed according to a sequence of movements determined by the control unit 12, and wherein the method preferably also comprises changing mode of operation between the manual and automatic operating modes during said sequence of movements.

According to another embodiment the method comprises determining the number, and the position, of target and/or load indicators 16, 20 on the user interface unit 14, dependent on the working assignment and/or the surroundings to the vehicle 6, and defining, on the user interface unit 14, the target and/or load indicators in dependence thereto.

The automatic procedure described in relation to the system and method is dynamic, which means that start and end positions may be varied in dependence of the real procedure. For example, if during manual control in a target zone a specific position of a target (e.g. the position where a crane tip connects to a container) is determined and that position is then applied in a next step, e.g. when returning e.g. the container to the position where it was picked up.

It is herein referred to an "automatic operating mode" of the crane which means that there is no user input from the operator for moving the crane from a start position to a target position.

A movement path may for example be calculated for the tip of the crane and the movements of the respective boom cylinders are then deduced based on this. By monitoring the boom movements, as well as the surroundings, the automatic movements of the crane booms as well as the movement path may be adapted during operation. An alternative would be to have pre-stored paths for different load and target positions.

A created movement scheme is assigned to a user input member, such as a button or a lever, on the remote user interface unit, and the execution instructions, such as initiation of movement scheme, speed of the tip of the crane during the movement scheme or halting the movement scheme, are further generated based of the operator's interaction with the user input members of the user interface unit.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A crane control system (2) for a crane (4) arranged to be mounted to a vehicle (6) for transporting a load (8), wherein the crane comprises crane components such as a crane column, a crane boom system and a working tool (10) arranged at the tip of the crane for attaching the load during loading and unloading to or from the vehicle (6), the crane control system comprises:
- a control unit (12) configured to generate control signals to actuators of the crane to control operation of the crane (4) and the working tool (10),
- a user interface unit (14) arranged to receive operator input of wanted movements of the crane for performing a working assignment with the tool, wherein the user interface unit (14) includes:
- at least three target indicators (16) configured to receive operator activation (18) and to indicate activation, each target indicator represents a target zone A-F surrounding the vehicle, and has a designated three-dimensional (3D) space defined in a coordinate system in relation to said vehicle, and a target zone point A₀-F₀ being a 3D point within the 3D space, and
- at least two load indicators (20) configured to receive operator activation (22) and to indicate activation, each load indicator represents a load zone on the vehicle, and has a designated 3D space defined by said coordinate system, and a load zone point L1, L2, L3 being a 3D point within the 3D space,
wherein, depending on the working assignment, a subgroup of said target and load zones may be set to be available for, and selectable by, the operator,
wherein said user interface unit (14) is configured to determine at least one activation signal (24) as a result of at least two received operator activations (18, 22) from said target/load indicator(s) (16, 20), wherein said activation signal(s) (24) represents at least two different zones, and to apply the activation signal(s) to said control unit (12), and that the control unit is configured to:
- receive said activation signal(s) (24);
- determine a sequence of movements of the crane tip between 3D points connected to said zones along a movement path in either direction,
- assign functionalities related to said movement to at least one user input member (26) of said user interface unit (14), and
- execute the movement of the crane tip by generating control signals, in response to activation of the at least one assigned user input member (26) when said control system (2) is in an automatic operating mode,
wherein the crane control system (2) is configured to be operated in a manual operating mode wherein the crane (4) is operated by control signals generated in response to operator input of crane movements via said user input members (26), and wherein, upon reaching the 3D point at the end of the executed movement, the control system is configured to be operated in the manual operating mode enabling the operator to take over the last part of the movement from the end position to the exact position of e.g. the loading or unloading.

2. A crane control system (2) according to claim 1, wherein the control unit (12) is further configured to determine a sequence of movements of the crane tip from a present position to one 3D point of a target or load zone.

3. A crane control system (2) according to claim 1 or 2, wherein said defined 3D point is either a default target zone point or a default load zone point, or any 3D point defined during a working assignment performed by the crane tip.

4. A crane control system (2) according to any of claims 1-3, wherein said control unit (12) is configured to determine the order of operator activation of target indicators(s) and/or load indicator(s) and to determine the direction of the crane tip movement between defined 3D points dependent on said order.

5. A crane control system (2) according to any of claims 1-4, wherein the crane control system (2) is operated in two operating modes:
the manual operating mode wherein the crane (4) is operated by control signals generated in response to operator input of crane movements via said user input members (26), and
the automatic operating mode, activated by the operator, and wherein the crane geometry and the crane tip position is changed according to a sequence of movements determined by the control unit (12).

6. A crane control system (2) according to claim 5, wherein said control unit (12) is configured to change mode of operation between said manual and automatic operating modes during said sequence of movements.

7. A crane control system (2) according to any of claims 1-6, wherein the control unit (12) is configured to determine the number, and the position, of target and/or load indicators (16, 20) on the user interface unit (14), dependent on the working assignment and/or the surroundings to the vehicle (6), and to define, on said user interface unit (14), said target and/or load indicators in dependence thereto.

8. A vehicle (6) comprising a crane, and a crane control system (2) according to any of claims 1-7.

9. A method of a crane control system (2) for a crane (4) arranged to be mounted to a vehicle (6) for transporting a load (8), wherein the crane comprises crane components such as a crane column, a crane boom system and a working tool (10) arranged at the tip of the crane for attaching the load during loading and unloading to or from the vehicle (6), the crane control system comprises:
- a control unit (12) configured to generate control signals to actuators of the crane to control operation of the crane (4) and the working tool (10),
- a user interface unit (14) arranged to receive operator input of wanted movements of the crane for performing a working assignment with the tool, wherein that method comprises:
A1 -receiving operator activation (18) of target indicator (16) and indicating activation of activated target indicator, each target indicator represents a target zone A-F surrounding the vehicle, and has a designated three-dimensional (3D) space defined in a coordinate system in relation to said vehicle, and a target zone point A₀-F₀ being a 3D point within the 3D space,
A2 -receiving operator activation (22) of load indicator (20) and indicating activation of activated load indicator, each load indicator represents a load zone on the vehicle, and has a designated 3D space defined in said coordinate system, and a load zone point L1, L2, L3 being a 3D point within the 3D space, wherein, depending on the working assignment, a subgroup of said target and load zones may be set to be available for, and selectable by, the operator,
A3 -determining at least one activation signal (24) as a result of at least two received operator activations (18, 22) from said target/load indicator(s) (16, 20), wherein said activation signal(s) (24) represents at least two different zones, and applying the activation signal(s) to said control unit (12),
A4 -receiving, by said control unit, said activation signal(s) (24);
- determining a sequence of movements of the crane tip between said 3D points connected to said zones along a movement path in either direction,
A5 -assigning functionalities related to said movement to at least one user input member (26) of said user interface unit (14), and
A6 -executing the movement of the crane tip by generating control signals, in response to activation of the at least one assigned user input member (26) when said control system (2) is in an automatic operating mode.
wherein the crane control system (2) is configured to be operated in a manual operating mode wherein the crane (4) is operated by control signals generated in response to operator input of crane movements via said user input members (26), and wherein the method further comprises upon reaching the 3D point at the end of the executed movement:
- operating the control system in the manual operating mode enabling the operator to take over the last part of the movement from the end position to the exact position of e.g. the loading or unloading.

10. The method according to claim 9, comprising determining a sequence of movements of the crane tip from a present position to one 3D point of a target or load zone.

11. The method according to claim 9 or 10, wherein said defined 3D point is either a default target zone point or a default load zone point, or any 3D point defined by a working assignment performed by the crane tip.

12. The method according to any of claims 9-11, comprising determining the order of operator activation of target indicators(s) and/or load indicator(s) and determining the direction of the crane tip movement between defined 3D points dependent on said order.

13. The method according to any of claims 9-11, comprising operating the crane control system (2) in two operating modes:
the manual operating mode wherein the crane (4) is operated by control signals generated in response to operator input via said user input members (26), and
the automatic operating mode, activated by the operator, and wherein the crane geometry and the crane tip position is changed according to a sequence of movements determined by the control unit (12), and wherein the method comprises changing mode of operation between said manual and automatic operating modes during said sequence of movements.

14. The method according to any of claims 9-13, comprises determining the number, and the position, of target and/or load indicators (16, 20) on the user interface unit (14), dependent on the working assignment and/or the surroundings to the vehicle (6), and defining, on said user interface unit (14), said target and/or load indicators in dependence thereto.

## Patentansprüche

1. Kransteuersystem (2) für einen Kran (4), der angeordnet ist, um an einem Fahrzeug (6) zum Transportieren einer Last (8) montiert zu werden, wobei der Kran Krankomponenten umfasst, wie etwa einen Kranmast, ein Kranauslegersystem und ein Arbeitswerkzeug (10), das an der Spitze des Krans zum Anbringen einer Last während des Beladens auf das Fahrzeug (6) und Entladens von diesem angeordnet ist, wobei das Kransteuersystem Folgendes umfasst
- eine Steuereinheit (12), die dazu konfiguriert ist, Steuersignale für Aktoren des Krans zu erzeugen, um den Betrieb des Krans (4) und des Arbeitswerkzeugs (10) zu steuern,
- eine Benutzerschnittstelleneinheit (14), die angeordnet ist, um Bedienereingaben von gewünschten Bewegungen des Krans zum Durchführen einer Tätigkeit mit dem Werkzeug zu empfangen, wobei die Benutzerschnittstelleneinheit (14) Folgendes beinhaltet:
- mindestens drei Zielindikatoren (16), die dazu konfiguriert sind, eine Bedieneraktivierung (18) zu empfangen und eine Aktivierung anzuzeigen, wobei jeder Zielindikator eine Zielzone A-F darstellt, die das Fahrzeug umgibt, und einen bestimmten dreidimensionalen (3D) Raum aufweist, der in einem Koordinatensystem in Bezug auf das Fahrzeug definiert ist, und wobei ein Zielzonenpunkt A₀-F₀ ein 3D-Punkt innerhalb des 3D-Raums ist, und
- mindestens zwei Lastindikatoren (20), die dazu konfiguriert sind, eine Bedieneraktivierung (22) zu empfangen und eine Aktivierung anzuzeigen, wobei jeder Lastindikator eine Lastzone an dem Fahrzeug darstellt und einen bestimmten 3D-Raum aufweist, der durch das Koordinatensystem definiert ist, und wobei ein Lastzonenpunkt L1, L2, L3 ein 3D-Punkt innerhalb des 3D-Raums ist,
wobei in Abhängigkeit von der Tätigkeit eine Teilgruppe der Ziel- und Lastzonen so eingestellt werden kann, dass sie für den Bediener verfügbar und durch ihn auswählbar ist, wobei die Benutzerschnittstelleneinheit (14) dazu konfiguriert ist, mindestens ein Aktivierungssignal (24) als ein Ergebnis von mindestens zwei empfangenen Bedieneraktivierungen (18, 22) von dem/den Ziel-/Lastindikator(en) (16, 20) zu bestimmen, wobei das/die Aktivierungssignal(e) (24) mindestens zwei unterschiedliche Zonen darstellt/darstellen, und das/die Aktivierungssignal(e) auf die Steuereinheit (12) anzuwenden, und wobei die Steuereinheit zu Folgendem konfiguriert ist:
- Empfangen des Aktivierungssignals/der Aktivierungssignale (24);
- Bestimmen einer Sequenz von Bewegungen der Kranspitze zwischen 3D-Punkten, die mit den Zonen entlang eines Bewegungsweges in beide Richtungen verbunden sind,
- Zuweisen von Funktionalitäten in Bezug auf die Bewegung zu mindestens einem Benutzereingabeelement (26) der Benutzerschnittstelleneinheit (14) und
- Ausführen der Bewegung der Kranspitze durch Erzeugen von Steuersignalen als Reaktion auf eine Aktivierung des mindestens einen zugewiesenen Benutzereingabeelements (26), wenn sich das Steuersystem (2) in einem automatischen Betriebsmodus befindet,
wobei das Kransteuersystem (2) dazu konfiguriert ist, in einem manuellen Betriebsmodus betrieben zu werden, wobei der Kran (4) durch Steuersignale betrieben wird, die als Reaktion auf eine Bedienereingabe von Kranbewegungen über die Benutzereingabeelemente (26) erzeugt werden, und wobei beim Erreichen des 3D-Punkts am Ende der ausgeführten Bewegung das Steuersystem dazu konfiguriert ist, in dem manuellen Betriebsmodus betrieben zu werden, der es dem Bediener ermöglicht, den letzten Teil der Bewegung von der Endposition zu der genauen Position von z. B. dem Beladen oder Entladen zu übernehmen.

2. Kransteuersystem (2) nach Anspruch 1, wobei die Steuereinheit (12) ferner dazu konfiguriert ist, eine Sequenz von Bewegungen der Kranspitze von einer gegenwärtigen Position zu einem 3D-Punkt einer Ziel- oder Lastzone zu bestimmen.

3. Kransteuersystem (2) nach Anspruch 1 oder 2, wobei der definierte 3D-Punkt entweder ein Standardzielzonenpunkt oder ein Standardlastzonenpunkt oder ein beliebiger 3D-Punkt ist, der während einer Tätigkeit definiert ist, die durch die Kranspitze durchgeführt wird.

4. Kransteuersystem (2) nach einem der Ansprüche 1-3, wobei die Steuereinheit (12) dazu konfiguriert ist, die Reihenfolge der Bedieneraktivierung von (einem) Zielindikator(en) und/oder (einem) Lastindikator(en) zu bestimmen und die Richtung der Bewegung der Kranspitze zwischen definierten 3D-Punkten in Abhängigkeit von der Reihenfolge zu bestimmen.

5. Kransteuersystem (2) nach einem der Ansprüche 1-4, wobei das Kransteuersystem (2) in zwei Betriebsmodi betrieben wird:
dem manuellen Betriebsmodus, wobei der Kran (4) durch Steuersignale betrieben wird, die als Reaktion auf eine Bedienereingabe von Kranbewegungen über die Benutzereingabeelemente (26) erzeugt werden, und
dem automatischen Betriebsmodus, der durch den Bediener aktiviert wird, und wobei die Krangeometrie und die Kranspitzenposition gemäß einer Sequenz von Bewegungen geändert werden, die durch die Steuereinheit (12) bestimmt wird.

6. Kransteuersystem (2) nach Anspruch 5, wobei die Steuereinheit (12) dazu konfiguriert ist, den Betriebsmodus zwischen dem manuellen und dem automatischen Betriebsmodus während der Sequenz von Bewegungen zu ändern.

7. Kransteuersystem (2) nach einem der Ansprüche 1-6, wobei die Steuereinheit (12) dazu konfiguriert ist, die Anzahl und die Position von Ziel- und/oder Lastindikatoren (16, 20) an der Benutzerschnittstelleneinheit (14) in Abhängigkeit von der Tätigkeit und/oder der Umgebung des Fahrzeugs (6) zu bestimmen und an der Benutzerschnittstelleneinheit (14) die Ziel- und/oder Lastindikatoren in Abhängigkeit davon zu definieren.

8. Fahrzeug (6), umfassend einen Kran und ein Kransteuersystem (2) nach einem der Ansprüche 1-7.

9. Verfahren eines Kransteuersystems (2) für einen Kran (4), der angeordnet ist, um an einem Fahrzeug (6) zum Transportieren einer Last (8) montiert zu werden, wobei der Kran Krankomponenten umfasst, wie etwa einen Kranmast, ein Kranauslegersystem und ein Arbeitswerkzeug (10), das an der Spitze des Krans zum Anbringen einer Last während des Beladens auf das Fahrzeug (6) und Entladens von diesem angeordnet ist, wobei das Kransteuersystem Folgendes umfasst
- eine Steuereinheit (12), die dazu konfiguriert ist, Steuersignale für Aktoren des Krans zu erzeugen, um den Betrieb des Krans (4) und des Arbeitswerkzeugs (10) zu steuern,
- eine Benutzerschnittstelleneinheit (14), die angeordnet ist, um Bedienereingaben von gewünschten Bewegungen des Krans zum Durchführen einer Tätigkeit mit dem Werkzeug zu empfangen, wobei dieses Verfahren Folgendes umfasst:
A1 - Empfangen einer Bedieneraktivierung (18) des Zielindikators (16) und Anzeigen einer Aktivierung des aktivierten Zielindikators, wobei jeder Zielindikator eine Zielzone A-F darstellt, die das Fahrzeug umgibt, und einen bestimmten dreidimensionalen (3D) Raum aufweist, der in einem Koordinatensystem in Bezug auf das Fahrzeug definiert ist, und wobei ein Zielzonenpunkt A₀-F₀ ein 3D-Punkt innerhalb des 3D-Raums ist,
A2 - Empfangen einer Bedieneraktivierung (22) des Lastindikators (20) und Anzeigen einer Aktivierung des aktivierten Lastindikators, wobei jeder Lastindikator eine Lastzone an dem Fahrzeug darstellt und einen bestimmten 3D-Raum aufweist, der in dem Koordinatensystem definiert ist, und wobei ein Lastzonenpunkt L1, L2, L3 ein 3D-Punkt innerhalb des 3D-Raums ist, wobei abhängig von der Tätigkeit eine Untergruppe der Ziel- und Lastzonen so eingestellt werden kann, dass sie für den Bediener verfügbar und durch diesen auswählbar ist,
A3 - Bestimmen von mindestens einem Aktivierungssignal (24) als Ergebnis von mindestens zwei empfangenen Bedieneraktivierungen (18, 22) von dem/den Ziel-/Lastindikator(en) (16, 20), wobei das/die Aktivierungssignal(e) (24) mindestens zwei unterschiedliche Zonen darstellt/darstellen, und Anwenden des Aktivierungssignals/der Aktivierungssignale auf die Steuereinheit (12),
A4 - Empfangen, durch die Steuereinheit, des Aktivierungssignals/der Aktivierungssignale (24);
- Bestimmen einer Sequenz von Bewegungen der Kranspitze zwischen den 3D-Punkten, die mit den Zonen entlang eines Bewegungsweges in beide Richtungen verbunden sind,
A5 - Zuweisen von Funktionalitäten in Bezug auf die Bewegung zu mindestens einem Benutzereingabeelement (26) der Benutzerschnittstelleneinheit (14) und
A6 - Ausführen der Bewegung der Kranspitze durch Erzeugen von Steuersignalen als Reaktion auf eine Aktivierung des mindestens einen zugewiesenen Benutzereingabeelements (26), wenn sich das Steuersystem (2) in einem automatischen Betriebsmodus befindet,
wobei das Kransteuersystem (2) dazu konfiguriert ist, in einem manuellen Betriebsmodus betrieben zu werden, wobei der Kran (4) durch Steuersignale betrieben wird, die als Reaktion auf eine Bedienereingabe von Kranbewegungen über die Benutzereingabeelemente (26) erzeugt werden, und wobei das Verfahren beim Erreichen des 3D-Punkts am Ende der ausgeführten Bewegung ferner Folgendes umfasst:
- Betreiben des Steuersystems in dem manuellen Betriebsmodus, der es dem Bediener ermöglicht, den letzten Teil der Bewegung von der Endposition zu der genauen Position von z. B. dem Laden oder Entladen zu übernehmen.

10. Verfahren nach Anspruch 9, umfassend Bestimmen einer Sequenz von Bewegungen der Kranspitze von einer gegenwärtigen Position zu einem 3D-Punkt einer Ziel- oder Lastzone.

11. Verfahren nach Anspruch 9 oder 10, wobei der definierte 3D-Punkt entweder ein Standardzielzonenpunkt oder ein Standardlastzonenpunkt oder ein beliebiger 3D-Punkt ist, der durch eine Tätigkeit definiert ist, die durch die Kranspitze durchgeführt wird.

12. Verfahren nach einem der Ansprüche 9-11, umfassend Bestimmen der Reihenfolge der Bedieneraktivierung von (einem) Zielindikator(en) und/oder (einem) Lastindikatoren) und Bestimmen der Richtung der Bewegung der Kranspitze zwischen definierten 3D-Punkten in Abhängigkeit von der Reihenfolge.

13. Verfahren nach einem der Ansprüche 9-11, umfassend Betreiben des Kransteuersystems (2) in zwei Betriebsmodi:
dem manuellen Betriebsmodus, wobei der Kran (4) durch Steuersignale betrieben wird, die als Reaktion auf eine Bedienereingabe über die Benutzereingabeelemente (26) erzeugt werden, und
dem automatischen Betriebsmodus, der durch den Bediener aktiviert wird, und wobei die Krangeometrie und die Kranspitzenposition gemäß einer Sequenz von Bewegungen geändert werden, die durch die Steuereinheit (12) bestimmt wird, und wobei das Verfahren Ändern des Betriebsmodus zwischen dem manuellen und dem automatischen Betriebsmodus während der Sequenz von Bewegungen umfasst.

14. Verfahren nach einem der Ansprüche 9-13, umfassend Bestimmen der Anzahl und der Position von Ziel- und/oder Lastindikatoren (16, 20) an der Benutzerschnittstelleneinheit (14), abhängig von der Tätigkeit und/oder der Umgebung des Fahrzeugs (6), und Definieren, an der Benutzerschnittstelleneinheit (14), der Ziel- und/oder Lastindikatoren in Abhängigkeit davon.

## Revendications

1. Système de commande de grue (2) pour une grue (4) agencée pour être montée sur un véhicule (6) afin de transporter une charge (8), dans lequel la grue comprend des composants de grue tels qu'une colonne de grue, un système de flèche de grue et un outil de travail (10) agencé à l'extrémité de la grue afin de fixer la charge pendant le chargement et le déchargement du véhicule (6), le système de commande de grue comprend :
- une unité de commande (12) configurée pour générer des signaux de commande vers des actionneurs de la grue pour commander le fonctionnement de la grue (4) et de l'outil de travail (10),
- une unité d'interface utilisateur (14) agencée pour recevoir une entrée d'opérateur de mouvements souhaités de la grue pour réaliser une attribution de travail avec l'outil, dans lequel l'unité d'interface utilisateur (14) comprend :
- au moins trois indicateurs cibles (16) configurés pour recevoir une activation d'opérateur (18) et pour indiquer une activation, chaque indicateur cible représente une zone cible A-F entourant le véhicule, et a un espace tridimensionnel (3D) désigné défini dans un système de coordonnées par rapport audit véhicule, et un point de zone cible A₀-F₀ étant un point 3D au sein de l'espace 3D, et
- au moins deux indicateurs de charge (20) configurés pour recevoir une activation d'opérateur (22) et pour indiquer une activation, chaque indicateur de charge représente une zone de charge sur le véhicule, et a un espace 3D désigné défini par ledit système de coordonnées, et un point de zone de charge L1, L2, L3 étant un point 3D au sein de l'espace 3D, dans lequel, en fonction de l'attribution de travail, un sous-groupe desdites zones cible et de charge peut être établi pour être disponible pour, et sélectionnable par, l'opérateur, dans lequel ladite unité d'interface utilisateur (14) est configurée pour déterminer au moins un signal d'activation (24) comme résultat d'au moins deux activations d'opérateur (18, 22) reçues à partir dudit ou desdits indicateur(s) cible/de charge (16, 20), dans lequel le(s)dit(s) signal(aux) d'activation (24) représente(nt) au moins deux zones différentes, et pour appliquer le ou les signal(aux) d'activation à ladite unité de commande (12), et l'unité de commande est configurée pour : -recevoir ledit ou lesdits signal(aux) d'activation (24) ;
- déterminer une séquence de mouvements de l'extrémité de grue entre des points 3D reliés auxdites zones le long d'un trajet de mouvement dans l'une ou l'autre direction,
- attribuer des fonctionnalités liées audit mouvement à au moins un élément d'entrée utilisateur (26) de ladite unité d'interface utilisateur (14), et - exécuter le mouvement de l'extrémité de grue en générant des signaux de commande, en réponse à l'activation de l'au moins un élément d'entrée utilisateur (26) attribué lorsque ledit système de commande (2) est dans un mode de fonctionnement automatique,
dans lequel le système de commande de grue (2) est configuré pour être mis en fonctionnement dans un mode de fonctionnement manuel dans lequel la grue (4) est mise en fonctionnement par des signaux de commande générés en réponse à une entrée opérateur de mouvements de grue via lesdits éléments d'entrée utilisateur (26), et dans lequel, lorsqu'il atteint le point 3D à la fin du mouvement exécuté, le système de commande est configuré pour être mis en fonctionnement dans le mode de fonctionnement manuel permettant à l'opérateur de prendre en charge la dernière partie du mouvement depuis la position de fin jusqu'à la position exacte, par exemple le chargement ou le déchargement.

2. Système de commande de grue (2) selon la revendication 1, dans lequel l'unité de commande (12) est en outre configurée pour déterminer une séquence de mouvements de l'extrémité de grue depuis une position actuelle jusqu'à un point 3D d'une zone cible ou de charge.

3. Système de commande de grue (2) selon la revendication 1 ou 2, dans lequel ledit point 3D défini est soit un point de zone cible par défaut, soit un point de zone de charge par défaut, soit n'importe quel point 3D défini pendant une attribution de travail réalisée par la pointe de grue.

4. Système de commande de grue (2) selon l'une quelconque des revendications 1 à 3, dans lequel ladite unité de commande (12) est configurée pour déterminer l'ordre d'activation par l'opérateur d'indicateur(s) cible(s) et/ou d'indicateur(s) de charge et pour déterminer la direction du mouvement de pointe de grue entre des points 3D définis en fonction dudit ordre.

5. Système de commande de grue (2) selon l'une quelconque des revendications 1 à 4, dans lequel le système de commande de grue (2) fonctionne dans deux modes de fonctionnement :
le mode de fonctionnement manuel dans lequel la grue (4) est mise en fonctionnement par des signaux de commande générés en réponse à l'entrée par l'opérateur de mouvements de grue via lesdits éléments d'entrée utilisateur (26), et le mode de fonctionnement automatique, activé par l'opérateur, et dans lequel la géométrie de la grue et la position de l'extrémité de la grue sont modifiées selon une séquence de mouvements déterminée par l'unité de commande (12).

6. Système de commande de grue (2) selon la revendication 5, dans lequel ladite unité de commande (12) est configurée pour changer de mode de fonctionnement entre lesdits modes de fonctionnement manuel et automatique pendant ladite séquence de mouvements.

7. Système de commande de grue (2) selon l'une quelconque des revendications 1 à 6, dans lequel l'unité de commande (12) est configurée pour déterminer le nombre et la position d'indicateurs cibles et/ou de charge (16, 20) sur l'unité d'interface utilisateur (14), en fonction de l'attribution de travail et/ou de l'environnement du véhicule (6), et pour définir, sur ladite unité d'interface utilisateur (14), lesdits indicateurs cibles et/ou de charge en fonction de ceux-ci.

8. Véhicule (6) comprenant une grue, et un système de commande de grue (2) selon l'une quelconque des revendications 1 à 7.

9. Procédé d'un système de commande de grue (2) pour une grue (4) agencée pour être montée sur un véhicule (6) afin de transporter une charge (8), dans lequel la grue comprend des composants de grue tels qu'une colonne de grue, un système de flèche de grue et un outil de travail (10) agencé à l'extrémité de la grue afin de fixer la charge pendant le chargement et le déchargement du véhicule (6), le système de commande de grue comprend :
- une unité de commande (12) configurée pour générer des signaux de commande vers des actionneurs de la grue pour commander le fonctionnement de la grue (4) et de l'outil de travail (10),
- une unité d'interface utilisateur (14) agencée pour recevoir une entrée d'opérateur de mouvements souhaités de la grue pour réaliser une attribution de travail avec l'outil, dans lequel ce procédé comprend :
A1 -la réception d'une activation d'opérateur (18) d'un indicateur cible (16) et l'indication d'une activation d'indicateur cible activé, chaque indicateur cible représente une zone cible A-F entourant le véhicule, et a un espace tridimensionnel (3D) désigné défini dans un système de coordonnées par rapport audit véhicule, et un point de zone cible A₀-F₀ étant un point 3D au sein de l'espace 3D,
A2 -la réception d'une activation d'opérateur (22) d'indicateur de charge (20) et l'indication d'une activation d'indicateur de charge activé, chaque indicateur de charge représente une zone de charge sur le véhicule, et possède un espace 3D désigné défini dans ledit système de coordonnées, et un point de zone de charge L1, L2, L3 étant un point 3D au sein de l'espace 3D, dans lequel, en fonction de l'attribution de travail, un sous-groupe desdites zones cible et de charge peut être établi comme étant disponible pour, et pouvant être sélectionné par, l'opérateur,
A3 -la détermination d'au moins un signal d'activation (24) comme résultat d'au moins deux activations d'opérateur (18, 22) reçues à partir dudit ou desdits indicateur(s) cible(s)/de charge (16, 20), dans lequel ledit ou lesdits signal(aux) d'activation (24) représente(nt) au moins deux zones différentes, et l'application du ou des signal(aux) d'activation à ladite unité de commande (12), A4 -la réception, par ladite unité de commande, dudit ou desdits signal(aux) d'activation (24) ;
- la détermination d'une séquence de mouvements de l'extrémité de grue entre desdits points 3D reliés auxdites zones le long d'un trajet de mouvement dans l'une ou l'autre direction,
A5 -l'attribution de fonctionnalités liées audit mouvement à au moins un élément d'entrée utilisateur (26) de ladite unité d'interface utilisateur (14), et
A6 -l'exécution du mouvement de la pointe de grue en générant des signaux de commande, en réponse à l'activation de l'au moins un élément d'entrée utilisateur (26) attribué lorsque ledit système de commande (2) est dans un mode de fonctionnement automatique.
dans lequel le système de commande de grue (2) est configuré pour être mis en fonctionnement dans un mode de fonctionnement manuel dans lequel la grue (4) est mise en fonctionnement par des signaux de commande générés en réponse à l'entrée par l'opérateur de mouvements de grue via lesdits éléments d'entrée utilisateur (26), et dans lequel le procédé comprend en outre, lorsque le point 3D atteint la fin du mouvement exécuté :
- le fonctionnement du système de commande dans le mode de fonctionnement manuel permettant à l'opérateur de prendre en charge la dernière partie du mouvement depuis la position de fin jusqu'à la position exacte, par exemple, de chargement ou de déchargement.

10. Procédé selon la revendication 9, comprenant la détermination d'une séquence de mouvements de la pointe de grue d'une position actuelle à un point 3D d'une zone cible ou de charge.

11. Procédé selon la revendication 9 ou 10, dans lequel ledit point 3D défini est soit un point de zone cible par défaut, soit un point de zone de charge par défaut, soit n'importe quel point 3D défini par une attribution de travail réalisée par la pointe de grue.

12. Procédé selon l'une quelconque des revendications 9 à 11, comprenant la détermination de l'ordre d'activation par l'opérateur d'indicateur(s) cible(s) et/ou d'indicateur(s) de charge et la détermination de la direction du mouvement de pointe de grue entre des points 3D définis en fonction dudit ordre.

13. Procédé selon l'une quelconque des revendications 9 à 11, comprenant le fonctionnement du système de commande de grue (2) dans deux modes de fonctionnement :
le mode de fonctionnement manuel dans lequel la grue (4) est mise en fonctionnement par des signaux de commande générés en réponse à une entrée d'opérateur via lesdits éléments d'entrée utilisateur (26), et
le mode de fonctionnement automatique, activé par l'opérateur, et dans lequel la géométrie de la grue et la position de l'extrémité de la grue sont changées selon une séquence de mouvements déterminée par l'unité de commande (12), et dans lequel le procédé comprend le changement du mode de fonctionnement entre lesdits modes de fonctionnement manuel et automatique pendant ladite séquence de mouvements.

14. Procédé selon l'une quelconque des revendications 9 à 13, comprenant la détermination du nombre et de la position d'indicateurs cibles et/ou de charge (16, 20) sur l'unité d'interface utilisateur (14), en fonction de l'attribution de travail et/ou de l'environnement du véhicule (6), et la définition, sur ladite unité d'interface utilisateur (14), desdits indicateurs cibles et/ou de charge en fonction de ceux-ci.
